(19) Europäisches Patentamt
European Patent Office
Office européen des brevets

(11) EP 4 763 914 A1

(12) **EUROPEAN PATENT APPLICATION**

(43) Date of publication:
**24.06.2026 Bulletin 2026/26**

(21) Application number: **24307213.9**

(22) Date of filing: **19.12.2024**

(51) International Patent Classification (IPC):
***C08L 77/00*** *(2006.01)* ***C08K 7/22*** *(2006.01)*
*C08G 69/40* *(2006.01)* *C08J 9/32* *(2006.01)*

(52) Cooperative Patent Classification (CPC):
**C08L 77/00; C08J 9/32;** C08G 69/40;
C08J 2201/03; C08J 2203/22; C08J 2377/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ARKEMA FRANCE**
**92800 Puteaux (FR)**

(72) Inventors:
- **DAVID, Romain**
**Kyoto, 600-8815 (JP)**
- **TESTUD, Blandine**
**27470 Serguigny (FR)**
- **MA, YiYuan**
**Changshu, 215522 (CN)**
- **PRENVEILLE, Thomas**
**King of Prussia, PA 19406 (US)**

(74) Representative: **Bandpay & Greuter**
**11, rue Christophe Colomb**
**75008 Paris (FR)**

# (54) COMPOSITION OF COPOLYMER HAVING POLYAMIDE BLOCKS AND POLYETHER BLOCKS AND EXPANDABLE MICROSPHERES

(57) The invention relates to a composition comprising at least one copolymer comprising polyamide blocks and polyether blocks having a number average molecular weight of from 20 000 to 100 000 g/mol, preferably from 25 000 to 80 000g/mol and wherein the mass ratio of the polyamide blocks relative to the polyether blocks of the copolymer is more than 1; from 0.1 to 6.0 % by weight of expandable microspheres, based on the total weight of the composition; optionally at least one UV stabilizer and/or UV absorber; and optionally at least one additional thermoplastic polymer compatible with the at least one copolymer comprising polyamide blocks and polyether blocks.

The invention also relates to a method for preparing such a composition, to an expanded composition obtainable from such a composition and to a method for producing said expanded composition.

EP 4 763 914 A1

## Description

### Technical field

The present invention relates to new compositions based on a copolymer comprising polyamide blocks and polyether blocks that are expandable, in particular in injection and extrusion processes, as well as to expanded compositions formed from said compositions and to methods for producing said compositions.

### Technical background

Various polymer foams or expanded structures are used in particular in the field of sports equipment, personal protective elements, electrical and electronic equipment or in other products for industrial or consumer markets.
Such applications require particular physical properties such as good ductility and high impact strength.
There are different technologies allowing to produce a porous structure from thermoplastic resin compositions. Some of them are based on the use of expandable microspheres in the matrix of the polymer to be expanded.
Document WO 2022/238509 describes a filament used for fused deposition modeling (FDM) 3D printing. The filament comprises at least one polymer having at least one thermoplastic portion and having a melting point Tf greater than 120°C and thermally expandable microspheres which are expandable at a temperature $T_{exp}$, the $T_f$ of the polymer being lower than the $T_{exp}$ of the thermally expandable microspheres. The polymer may for example be PEBAX® RNew® 35R53 SP01 or PEBAX® RNew® 40R53 SP01 sold by ARKEMA. However, the composition produced by FDM may exhibit insufficient mechanical properties, such as low hardness, low elongation at break, high anisotropic properties, high sensitivity to blooming, and high yellow index.
There is a continuous demand for a composition based on copolymer having polyamide blocks and polyether blocks which can lead to an expanded material that is lightweight, with a low yellow index and having good mechanical properties, in particular, high ductility, high abrasion resistance, high tear resistance, high stress at break and/or stable storage modulus under temperature variation.

### Summary of the invention

It is a first object of the invention to provide a composition comprising:

- at least one copolymer comprising polyamide blocks and polyether blocks having a number average molecular weight of from 20 000 to 100 000 g/mol, preferably from 25 000 to 80 000g/mol and wherein the mass ratio of the polyamide blocks relative to the polyether blocks of the copolymer is more than 1;
- from 0.1 to 6.0 % by weight of expandable microspheres, based on the total weight of the composition;
- optionally at least one UV stabilizer and/or UV absorber; and
- optionally at least one additional thermoplastic polymer compatible with the at least one copolymer comprising polyamide blocks and polyether blocks.

In some embodiments, the composition has a melt flow index lower than or equal to 150 g/10 min, preferably from 1 to 150 g/10 min.
In some embodiments, the polyamide blocks of the at least one copolymer comprising polyamide blocks and polyether blocks are selected from blocks of PA 11, PA 12, PA 6, PA 5.10, PA 5.12, PA 6.10, PA 6.12, PA 6.13, PA 10.9, PA 10.10, PA 10.12, PA 10.14, PA 12.9, and mixtures thereof and copolymers thereof; and/or the polyether blocks of the copolymer comprising polyamide blocks and polyether blocks are polyethylene glycol blocks and/or polytetrahydrofuran blocks.
In some embodiments, the polyamide blocks of the at least one copolymer comprising polyamide blocks and polyether blocks have a number average molecular weight of from 400 to 20 000 g/mol, preferably from 500 to 10000 g/mol; and/or the polyether blocks of the at least one copolymer comprising polyamide blocks and polyether blocks have a number average molecular weight of from 100 to 6000 g/mol, preferably from 200 to 3000 g/mol.
In some embodiments, the composition comprises the expandable microspheres in an amount of from 0.5 to 5.0 % by weight, preferably from 1.0 to 4.0 % by weight, based on the total weight of the composition.
In some embodiments, the at least one copolymer comprising polyamide blocks and polyether blocks has a melting temperature $T_m$, and the expandable microspheres have an expansion start temperature of from Tm + 30°C to 270°C and/or a maximum expansion temperature lower than or equal to 280°C.
In some embodiments, the composition comprises less than or equal to 2 % by weight, preferably less than or equal to 1 % by weight of LDPE, preferably of polyethylene, more preferably of polyolefin; preferably, the composition is devoid of LDPE, preferably of polyethylene, more preferably of polyolefin.

The invention also relates to an expanded composition obtainable from expanding a composition as described above.

In some embodiments, the expanded composition has a melt flow index lower than or equal to 150 g/10 min, preferably from 1 to 150 g/10 min, more preferably from 10 to 110 g/10 min.

In some embodiments, the expanded composition has a density from 0.4 to 1.1 $g/cm^3$.

The invention also relates to an article consisting of an expanded composition as described above, or comprising at least one element consisting of an expanded composition as described above, preferably selected from soles of sports shoes, balls, gloves, personal protective equipment, automobile and railway parts, construction parts and parts of electrical and electronic equipment.

The invention also relates to a method for preparing a composition as described above, comprising the steps of:

- providing the at least one copolymer comprising polyamide blocks and polyether blocks;
- providing the expandable microspheres; and
- compounding in an extruder the at least one copolymer comprising polyamide blocks and polyether blocks and the expandable microspheres.

The invention also relates to a method for preparing a composition as described above, comprising the steps of:

- providing the at least one copolymer comprising polyamide blocks and polyether blocks in the form of a powder;
- providing the expandable microspheres; and
- dry-blending the powder of copolymer comprising polyamide blocks and polyether blocks and the expandable microspheres.

In some embodiments, the expandable microspheres are provided in the form of a masterbatch comprising the expandable microspheres and a polymer, preferably the at least one additional thermoplastic polymer compatible with the at least one copolymer comprising polyamide blocks and polyether blocks.

The invention also relates to a method for producing an expanded composition as described above, comprising expanding a composition as described above by heating said composition.

In some embodiments, the expanding step is carried out by injection molding or extrusion, preferably by injection molding.

The present invention enables to meet the abovementioned need. In particular, the invention provides a composition of copolymer comprising polyamide blocks and polyether blocks which makes it possible to obtain an expanded composition having a relatively low density, high abrasion resistance, high tear resistance, high stress at break and/or stable storage modulus under temperature variation. In addition, the composition of the invention has a viscosity suitable for use in injection processes.

This is achieved by the combination of a copolymer comprising polyamide blocks and polyether blocks having a particular number average molecular weight and a specific mass ratio of the polyamide blocks to the polyether blocks, and expandable microspheres. This combination of specific elements surprisingly makes it possible to achieve the combination of the above-mentioned beneficial properties.

## Detailed description

The invention will now be described in more detail without limitation in the following description.

Unless otherwise mentioned, the percentages in the present application are percentages by weight.

In the present text, the amounts indicated for a given species can apply to this species according to all its definitions (as mentioned in the present text), including the more restrictive definitions.

### Expandable composition

The composition of the invention comprises at least one copolymer comprising polyamide blocks and polyether blocks (or polyamide polyether block copolymer or PEBA).

The PEBAs result from the polycondensation of polyamide (PA) blocks (rigid or hard blocks) with reactive ends with polyether blocks (flexible or soft blocks) with reactive ends, such as, *inter alia,* the polycondensation:

1) of polyamide blocks with diamine chain ends with polyoxyalkylene blocks with dicarboxylic chain ends;
2) of polyamide blocks with dicarboxylic chain ends with polyoxyalkylene blocks with diamine chain ends, obtained, for example, by cyanoethylation and hydrogenation of aliphatic polyoxyalkylene $\alpha,\omega$-dihydroxylated blocks called polyetherdiols;

3) of polyamide blocks with dicarboxylic chain ends with polyetherdiols (aliphatic α,ω-dihydroxylated polyoxyalkylene blocks), the products obtained being, in this particular case, polyetheresteramides.

The polyamide blocks with dicarboxylic chain ends originate, for example, from the condensation of polyamide precursors in the presence of a dicarboxylic acid chain limiter. The polyamide blocks with diamine chain ends originate, for example, from the condensation of polyamide precursors in the presence of a diamine chain limiter.

Three types of polyamide blocks may advantageously be used.

According to a first type, the polyamide blocks originate from the condensation of a dicarboxylic acid, in particular those having from 4 to 36 carbon atoms, preferably those having from 4 to 20 carbon atoms, more preferentially those having from 6 to 18 carbon atoms, and of an aliphatic or aromatic diamine, in particular those having from 2 to 20 carbon atoms, preferably those having from 6 to 14 carbon atoms.

As examples of dicarboxylic acids, mention may be made of 1,4-cyclohexanedicarboxylic acid, butanedioic acid, adipic acid, azelaic acid, suberic acid, sebacic acid, dodecanedicarboxylic acid, octadecanedicarboxylic acid, terephthalic acid and isophthalic acid, but also dimerized fatty acids.

As examples of diamines, mention may be made of tetramethylenediamine, hexamethylenediamine, 1,10-decamethylenediamine, dodecamethylenediamine, trimethylhexamethylenediamine, the isomers of bis(4-aminocyclohexyl)methane (BACM), bis(3-methyl-4-aminocyclohexyl)methane (BMACM) and 2,2-bis(3-methyl-4-aminocyclohexyl) propane (BMACP), para-aminodicyclohexylmethane (PACM), isophoronediamine (IPDA), 2,6-bis(aminomethyl)norbornane (BAMN) and piperazine (Pip).

Advantageously, polyamide blocks PA 4.12, PA 4.14, PA 4.18, PA 6.10, PA 6.12, PA 6.14, PA 6.18, PA 9.12, PA 10.10, PA 10.12, PA 10.14, PA 10.18, PA 9.T, PA10.T and PA 12.T are used. In the notation PA X.Y, X represents the number of carbon atoms derived from the diamine residues and Y represents the number of carbon atoms derived from the diacid residues, conventionally.

According to a second type, the polyamide blocks result from the condensation of one or more α,ω-aminocarboxylic acids and/or of one or more lactams having from 6 to 12 carbon atoms in the presence of a dicarboxylic acid having from 4 to 18 carbon atoms or of a diamine. As examples of lactams, mention may be made of caprolactam, oenantholactam and lauryllactam. As examples of α,ω-aminocarboxylic acids, mention may be made of aminocaproic acid, 7-aminoheptanoic acid, 10-aminodecanoic acid, 11-aminoundecanoic acid and 12-aminododecanoic acid.

Advantageously, the polyamide blocks of the second type are blocks of PA 10 (polydecanamide), PA 11 (polyundecanamide), PA 12 (polydodecanamide) or PA 6 (polycaprolactam). In the notation PA X, X represents the number of carbon atoms derived from the amino acid residues.

According to a third type, the polyamide blocks result from the condensation of at least one α,ω-aminocarboxylic acid (or a lactam), at least one diamine and at least one dicarboxylic acid.

In this case, the polyamide blocks are prepared by polycondensation:

- of the linear aliphatic or aromatic diamine(s) having X carbon atoms;
- of the dicarboxylic acid(s) containing Y carbon atoms; and
- of the comonomer(s) {Z}, chosen from lactams and α,ω-aminocarboxylic acids containing Z carbon atoms and equimolar mixtures of at least one diamine containing X1 carbon atoms and of at least one dicarboxylic acid containing Y1 carbon atoms, (X1, Y1) being different from (X, Y),
- said comonomer(s) {Z} being introduced in a weight proportion advantageously ranging up to 50%, preferably up to 20%, even more advantageously up to 10% relative to the total amount of polyamide precursor monomers;
- in the presence of a chain limiter chosen from dicarboxylic acids.

Advantageously, the dicarboxylic acid containing Y carbon atoms is used as chain limiter, said dicarboxylic acid being introduced in excess relative to the stoichiometry of the diamine(s).

According to one variant of this third type, the polyamide blocks result from the condensation of at least two α,ω-aminocarboxylic acids or of at least two lactams containing from 6 to 12 carbon atoms or of one lactam and one aminocarboxylic acid not having the same number of carbon atoms, in the optional presence of a chain limiter. As examples of aliphatic α,ω-aminocarboxylic acids, mention may be made of aminocaproic acid, 7-aminoheptanoic acid, 10-aminodecanoic acid, 11-aminoundecanoic acid and 12-aminododecanoic acid. As examples of lactams, mention may be made of caprolactam, oenantholactam and lauryllactam. As examples of aliphatic diamines, mention may be made of hexamethylenediamine, dodecamethylenediamine and trimethylhexamethylenediamine. As examples of cycloaliphatic diacids, mention may be made of 1,4-cyclohexanedicarboxylic acid. As examples of aliphatic diacids, mention may be made of butanedioic acid, adipic acid, azelaic acid, suberic acid, sebacic acid, dodecanedicarboxylic acid, dimerized fatty acids (these dimerized fatty acids preferably have a dimer content of at least 98%; they are preferably hydrogenated; they are, for example, products sold under the tradename "PRIPOLO" by CRODA, or under the tradename EMPOL® by BASF, or under the tradename Radiacid® by the company OLEON) and polyoxyalkylene α,ω-diacids. As examples of aromatic

diacids, mention may be made of terephthalic acid (T) and isophthalic acid (I). As examples of cycloaliphatic diamines, mention may be made of the isomers of bis(4-aminocyclohexyl)methane (BACM), bis(3-methyl-4-aminocyclohexyl) methane (BMACM) and 2,2-bis(3-methyl-4-aminocyclohexyl)propane (BMACP), and para-aminodicyclohexylmethane (PACM). The other diamines commonly used may be isophoronediamine (IPDA), 2,6-bis(aminomethyl)norbornane (BAMN) and piperazine.

As examples of polyamides of the third type, mention may be made of PA 6.6/6.10/11/12, PA 6/11, PA 6/12 and PA 11/12.

The notations PA X/Y, PA X/Y/Z, etc. relate to copolyamides wherein X, Y, Z, etc. represent homopolyamide units as described above.

Advantageously, the polyamide blocks of the copolymer used in the invention comprise blocks of polyamide PA 6, PA 10, PA 11, PA 12, PA 5.4, PA 5.9, PA 5.10, PA 5.12, PA 5.13, PA 5.14, PA 5.16, PA 5.18, PA 5.36, PA 6.4, PA 6.6, PA 6.9, PA 6.10, PA 6.12, PA 6.13, PA 6.14, PA 6.16, PA 6.18, PA 6.36, PA 10.4, PA 10.9, PA 10.10, PA 10.12, PA 10.13, PA 10.14, PA 10.16, PA 10.18, PA 10.36, PA 10.T, PA 12.4, PA 12.9, PA 12.10, PA 12.12, PA 12.13, PA 12.14, PA 12.16, PA 12.18, PA 12.36, PA 9.T, PA10.T, PA 12.T, or mixtures or copolymers thereof; and preferably comprise blocks of polyamide PA 11, PA 12, PA 6, PA 5.10, PA 5.12, PA 6.10, PA 6.12, PA 6.13, PA 10.9, PA 10.10, PA 10.12, PA 10.14, PA 12.9, or mixtures or copolymers thereof.

The polyether blocks consist of alkylene oxide units.

The polyether blocks may notably be PEG (polyethylene glycol) blocks, i.e. blocks consisting of ethylene oxide units, and/or PPG (propylene glycol) blocks, i.e. blocks consisting of propylene oxide units, and/or PO3G (polytrimethylene glycol) blocks, i.e. blocks consisting of polytrimethylene glycol ether units, and/or PTMG blocks, i.e. blocks consisting of tetramethylene glycol units, also called polytetrahydrofuran. The PEBA copolymers may comprise in their chain several types of polyethers, wherein the copolyethers may be block copolyethers or random copolyethers.

It is also possible to use blocks obtained by oxyethylation of bisphenols, such as, for example, bisphenol A. The latter products are described in particular in document EP 613919.

The polyether blocks may also consist of ethoxylated primary amines. As examples of ethoxylated primary amines, mention may be made of the products of formula:

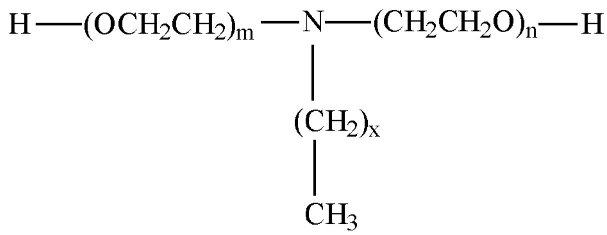

in which m and n are integers between 1 and 20 and x is an integer between 8 and 18. These products are, for example, commercially available under the Noramox® brand name from CECA and under the brand name GENAMIN® from CLARIANT.

The soft polyether blocks may comprise polyoxyalkylene blocks with $NH_2$ chain ends, wherein such blocks can be obtained by cyanoacetylation and hydrogenation of aliphatic $\alpha,\omega$-dihydroxylated polyoxyalkylene blocks called polyetherdiols. More particularly, commercial products Jeffamine or Elastamine may be used (e.g. Jeffamine® D400, D2000, ED 2003, XTJ 542, commercial products from Huntsman, also described in documents JP 2004346274, JP 2004352794 and EP 1482011).

The polyetherdiol blocks are either used as such and copolycondensed with polyamide blocks with carboxylic ends, or aminated to be transformed into polyether diamines and condensed with polyamide blocks with carboxylic ends. The general method for preparing PEBA copolymers having ester bonds between the PA blocks and the PE blocks in two steps is known and is described, for example, in document FR 2846332. The general method for preparing PEBA copolymers having amide bonds between the PA blocks and the PE blocks is known and described, for example, in document EP 1482011. The polyether blocks may also be mixed with polyamide precursors and a diacid chain limiter in order to prepare polymers comprising polyamide blocks and polyether blocks having randomly distributed units (one-step method).

PEBAs suitable for the invention include the products PEBAX® sold by Arkema, Vestamid® sold by Evonik®, Grilamid® sold by EMS, Wanelite® sold by Wanhua, Pelestat® PEBA sold by Sanyo or any other PEBA from other suppliers.

If the block copolymers described above comprise at least one polyamide block and at least one polyether block, the present invention also covers copolymers comprising two, three, four (or even more) different blocks, in particular chosen from those described in the present description, provided that these blocks comprise at least polyamide and

polyether blocks.

For example, the copolymer according to the invention may be a segmented block copolymer comprising three different types of blocks (or "triblock" copolymer), which results from the condensation of several blocks, preferably as described above. Said triblock may for example be a copolymer comprising a polyamide block, a polyester block and a polyether block or a copolymer comprising a polyamide block and two different polyether blocks, for example a PEG block and a PTMG block. The triblock may be selected from copolyetheresteramide and copolyetheramideurethanes.

The number average molecular weight of the polyamide blocks in the PEBA copolymer is preferably from 400 to 20 000 g/mol, more preferentially from 500 to 10 000 g/mol. In some embodiments, the number average molecular weight of the polyamide blocks in the PEBA copolymer is from 400 to 600 g/mol, or 600 to 800 g/mol, or from 800 to 1000 g/mol, or from 1000 to 1500 g/mol, or from 1500 to 2000 g/mol, or from 2000 to 2500 g/mol, or from 2500 to 3000 g/mol, or from 3000 to 3500 g/mol, or from 3500 to 4000 g/mol, or from 4000 to 5000 g/mol, or from 5000 to 6000 g/mol, or from 6000 to 7000 g/mol, or from 7000 to 8000 g/mol, or from 8000 to 9000 g/mol, or from 9000 to 10 000 g/mol, or from 10 000 to 12 000 g/mol, or from 12 000 to 14 000 g/mol, or from 14 000 to 16 000 g/mol, or from 16 000 to 18 000 g/mol, or from 18 000 to 20 000 g/mol.

The number average molecular weight of the polyether blocks is preferably from 100 to 6000 g/mol, more preferably from 200 to 3000 g/mol. In some embodiments, the number average molecular weight of the polyether blocks is from 100 to 200 g/mol, or from 200 to 500 g/mol, or from 500 to 800 g/mol, or from 800 to 1000 g/mol, or from 1000 to 1500 g/mol, or from 1500 to 2000 g/mol, or from 2000 to 2500 g/mol, or from 2500 to 3000 g/mol, or from 3000 to 3500 g/mol, or from 3500 to 4000 g/mol, or from 4000 to 4500 g/mol, or from 4500 to 5000 g/mol, or from 5000 to 5500 g/mol, or from 5500 to 6000 g/mol.

The number average molecular weight is set by the content of chain limiter. It may be calculated according to the equation:

$$M_n = n_{monomer} \times MW_{repeating\ unit} / n_{chain\ limiter} + MW_{chain\ limiter}$$

In this formula, $n_{monomer}$ represents the number of moles of monomer, $n_{chain\ limiter}$ represents the number of moles of diacid limiter in excess, $MW_{repeating\ unit}$ represents the molar mass of the repeating unit, and $MW_{chain\ limiter}$ represents the molar mass of the diacid in excess.

The number average molecular weight of the polyamide blocks and polyether blocks can be determined by proton ($^1$H) NMR, for example in a TFA/$CDCl_3$ mixture (1/4 v/v), preferably using a spectrometer Brucker AM 500, according to the protocol described in the article by Maréchal et al., « Synthesis and characterization of poly(copolyethers-block-polyamides) - II. Characterization and properties of the multiblock copolymers », Polymer, Volume 41, 2000, 3561-3580 (assignment of the signals being made using Figure 5 of said article).

The weight ratio of the polyamide blocks relative to the polyether blocks of the PEBA of the invention is more than 1, typically from 1.5. to 30, preferably from 1.5 to 25, even more preferentially from 2. to 25. This weight ratio can be calculated by dividing the number average molecular weight of the polyamide blocks by the number average molecular weight of the polyether blocks. In particular, the weight ratio of the polyamide blocks relative to the polyether blocks of the copolymer may be from 1.5 to 5, or from 5 to 10, or from 10 to 15, or from 15 to 20, or from 20 to 25, or from 25 to 30.

The PEBA according to the invention has a number average molecular weight (Mn) of from 20 000 to 100 000 g/mol, preferably from 25 000 to 80 000g/mol, more preferably from 30 000 to 75 000 g/mol. In particular, the PEBA may have number average molecular weight of from 20 000 to 35 000 g/mol, or from 35 000 to 50 000 g/mol, or from 50 000 to 75 000 g/mol, or from 75 000 to 80 000 g/mol.

The number average molecular weight of the PEBA can be measured by gel permeation chromatography (GPC or size exclusion chromatography), in particular according to ISO 16014-1: 2012, 16014-2:2012, and 16014-3:2012. More particularly, the following parameters and conditions can be used for the measurement:

- Instrument: Waters Alliance 2695;
- Solvent: hexafluoroisopropanol stabilized with 0.05 M potassium trifluoroacetate;
- Flow rate: 1 mL/minute;
- Column temperature: 40°C;
- Two columns in series: 1000 Å PFG and 100 Å PFG (PPS);
- Sample concentration: 2 g/L (dissolved at room temperature for 24 hours);
- Sample filtration: Using a syringe equipped with an ACRODISC PTFE filter, 25 mm diameter, 0.2 μm porosity;
- Injection volume: 100 μL;
- Refractive index detection: at 40°C with UV detection at 228 nm;
- Calibration: using PMMA standards from 1,900,000 to 402 g/mol.

Calibration curve modeled by a fifth-degree polynomial.

Preferably, the copolymer comprising polyamide blocks and polyether blocks has a melting temperature ($T_m$) lower than or equal to 230°C, more preferably lower than or equal to 200°C. The melting temperature may advantageously be measured by differential scanning calorimetry (DSC) according to ISO 11357-3:2018 "Plastics - Differential scanning calorimetry (DSC) Part 3".

The PEBA may advantageously be present in the composition in an amount of from 29 to 99.89 % by weight, preferably from 42 to 99.45% by weight, more preferably from 54.8 to 98.9% by weight, based on the total weight of the composition. For example, the amount of the PEBA in the composition may be from 29 to 40 % by weight, or from 40 to 50 % by weight, or from 50 to 60 % by weight, or from 60 to 70 % by weight, or from 70 to 80 % by weight, or from 80 to 85 % by weight, or from 85 to 90 % by weight, or from 90 to 92 % by weight, or from 92 to 94 % by weight, or from 94 to 95 % by weight, or from 95 to 96 % by weight, or from 96 to 97 % by weight, or from 97 to 98 % by weight, or from 98 to 98.9 % by weight, or from 98.9 to 99.45 % by weight, or from 99.45 to 99.99 % by weight. In some embodiments, the amount of the PEBA in the composition is from 92 to 99.89 % by weight.

The composition may comprise one PEBA as described above, or a mixture of PEBAs as described above (for example, at least two PEBAs as described above).

The composition of the invention also comprises expandable microspheres. The expandable microspheres according to the present invention include an outer shell, typically a polymer shell, and a foaming agent (liquid and/or gas) encapsulated inside the outer shell.

The expandable microspheres are typically heat-expandable. Upon heating, the outer shell softens and the foaming agent inside the microsphere changes state to create a large volume of gas with high pressure which will expand the microsphere substantially. Preferably, the foaming agent is a liquid (at room temperature) that becomes a gas by heating.

In context of the present invention, a foaming agent is also called an expanding agent.

Preferably, the foaming agent comprises, or is, one or more hydrocarbons. Examples of hydrocarbons suitable as foaming agent are methane, ethane, ethylene, propane, propene, n-butane, isobutane, butene, isobutene, n-pentane, isopentane, neopentane, n-hexane, isohexane, n-heptane, isoheptane, n-octane, isooctoane, n-nonane, isononane, n-decane, isodecane, n-dodecane, isododecane, isohexadecane, petroleum ethers, isoparaffin mixtures, and any mixture thereof. Other foaming agents than can be used according to the invention include chlorofluorocarbons such as $CCl_3F$, $CCl_2F_2$, $CClF_3$, and $CClF_2$-$CClF_2$; and tetraalkylsilanes such as tetramethylsilane, trimethylethylsilane, trimethylisopropylsilane, and trimethyl-n-propylsilane. The foaming agent may be a single substance or may be a combination of two or more of different substances, in particular as described above.

Preferably, the outer shell comprises at least one polymer. The outer shell may consist of the at least one polymer.

Advantageously, the outer shell comprises at least a polymer containing, or consisting of, one or more units selected from units derived from nitrile monomers, such as acrylonitrile, methacrylonitrile, α-chloro acrylonitrile, α-ethoxy acrylonitrile, and fumaronitrile; monomers containing carboxyl groups, such as acrylic acid, methacrylic acid, itaconic acid, maleic acid, fumaric acid, and citraconic acid; vinylidene chloride; vinyl acetate; (meth)acrylates, such as methyl(meth) acrylate, ethyl (meth)acrylate, n-butyl(meth)acrylate, isobutyl (meth)acrylate, t-butyl(meth)acrylate, isobornyl(meth) acrylate, cyclohexyl(meth)acrylate, benzyl (meth)acrylate, and β-carboxyethyl acrylate; styrene monomers, such as styrene, α-methyl styrene, and chlorostyrene; and amide monomers, such as acrylamide, substituted acrylamide, methacrylamide, and substituted methacrylamide. The polymer may be a homopolymer or a copolymer. Suitable copolymers for the outer shell include vinylidene chloride-methyl methacrylate-acrylonitrile copolymer, methyl methacrylate-acrylonitrile-methacrylonitrile copolymer, methyl methacrylate-acrylonitrile copolymer, methacrylate-acrylonitrile copolymer, methacrylate-acrylonitrile copolymer, methyl methacrylonitrile-acrylonitrile copolymer, acrylonitrile-methacrylonitrile-itaconic acid copolymer and combination thereof.

The outer shell may comprise one polymer as described above or a mixture of polymers as described above. The outer shell may consist of one or more polymers as described above.

The expandable microsphere may be produced by suspension-polymerizing one or more types of polymerizable monomer in the presence of the foaming agent in an aqueous dispersion medium, preferably containing a dispersion stabilizer.

The average particle size of the expandable microspheres is not particularly limited. Preferably, the expandable microspheres have an average particle size of from 1 to 200 μm, more preferably from 3 to 150 μm, even more preferably from 5 to 100 μm, further preferably from 10 to 50 μm, further preferably from 15 to 40 μm, such as from 15 to 30 μm.

The expandable microspheres of the present invention have preferably an expansion start temperature ($T_{s_exp}$) greater than or equal to $T_m$ + 30°C, wherein $T_m$ is the melting temperature of the PEBA, preferably $T_{s_exp}$ being greater than or equal to 180°C, preferably greater than or equal to 190°C. Using expandable microspheres having such an expansion start temperature makes it possible to prepare the composition by compounding in an extruder while reducing the risk of premature expansion of the microspheres in the extruder. Additionally, or independently, the expansion start temperature of the expandable microspheres may advantageously be lower than or equal to 270°C, preferably lower than or equal to

260°C. Thus, the expandable microspheres preferably have an expansion start temperature of from ($T_m$ + 30°C) to 270°C, preferably from 180 to 260°C.

The expandable microspheres of the present invention preferably have a maximum expansion temperature ($T_{max_exp}$) lower than or equal to 280°C. This allows for the preparation of an expanded composition from the composition under conditions that make it possible to avoid, or at least reduce, yellowing of the copolymer comprising polyamide blocks and polyether blocks (that can occur when the copolymer is subjected to high temperatures), while maintaining the beneficial properties, such as high hardness, high ductility and high impact strength, conferred by the particular copolymer comprising polyamide blocks and polyether blocks. Typically, the expandable microspheres have a maximum expansion temperature greater than the expansion start temperature ($T_{s_exp}$) of the PEBA. Preferably, the expandable microspheres have a maximum expansion temperature greater than or equal to 180°C preferably a maximum expansion temperature from 180 to 280°C, more preferably from 180 to 220°C.

The expansion start temperature and the maximum expansion temperature of the expandable microspheres can be measured using a thermomechanical analyzer. More specifically, a sample of expandable microspheres is heated at a temperature increasing rate of 5°C/min using the thermomechanical analyzer. When a height displacement of the portion occupied by the sample is continuously measured, the expansion start temperature is the temperature at which height displacement begins and the maximum expansion temperature is the temperature at which height displacement is the greatest.

The expandable microspheres are present in the composition in an amount of from 0.1 to 6.0 % by weight, preferably from 0.5 to 5.0 % by weight, more preferably from 1.0. to 4.0 % by weight (based on the total weight of the composition). For example, the composition may comprise the expandable microspheres in an amount of from 0.1 to 0.5 % by weight, or from 0.5 to 1.0 % by weight, or from 1.0 to 1.5 % by weight, or from 1.5 to 2.0 % by weight, or from 2.0 to 2.5 % by weight, or from 2.5 to 3.0 % by weight, or from 3.0 to 3.5 % by weight, or from 3.5 to 4.0 % by weight, or from 4.0 to 4.5 % by weight, or from 4.5 to 5.0 % by weight, or from 5.0 to 5.5 % by weight, or from 5.5 to 6.0 % by weight, based on the total weight of the composition. If the amount of expandable microspheres in the composition is higher than 6.0 % by weight, percolation of the expandable microspheres can occur, the mechanical properties of the composition such as elongation at break will be deteriorated.

Preferably, the composition of the invention is devoid of any other blowing agent (other than the expandable microspheres). In particular, the composition of the invention is preferably devoid of blowing agents comprising a metal hydrogen carbonate salt., which may result in high yellowing.

The composition of the invention may comprise at least one additional thermoplastic polymer. Preferably, said additional thermoplastic polymer is a copolyamide or an elastomer, more preferably a polar elastomer, for example a thermoplastic polyurethane.

The additional thermoplastic polymer may in particular come from the use of expandable microspheres in the form of a masterbatch, as described below, when preparing the composition.

The additional thermoplastic polymer may be present in the composition in an amount of from 0 to 6 % by weight, in particular from 0.1 to 6 % by weight, preferably from 0.5 to 5 % by weight, more preferably from 1 to 4 % by weight, based on the total weight of the composition.

In some embodiments, the additional thermoplastic polymer is present in an amount of from 0 to 0.1 % by weight, or from 0.1 to 0.5 % by weight, or from 0.5 to 1.0 % by weight, or from 1 to 1.5 % by weight, or from 1.5 to 2 % by weight, or from 2 to 2.5 % by weight, or from 2.5 to 3 % by weight, or from 3 to 3.5 % by weight, or from 3.5 to 4 % by weight, or from 4 to 4.5 % by weight, or from 4.5 to 5 % by weight, or from 5 to 5.5 % by weight, or from 5.5 to 6 % by weight. In some embodiments, the amount (weight) of additional thermoplastic polymer may be the same or substantially the same as the amount of expandable microspheres.

In some embodiments, the composition may comprise at least one polyolefin, more particularly selected from polyethylene, ethylene/vinyl acetate copolymers (EVA) and mixtures thereof. The polyethylene may in particular be HDPE (high-density polyethylene), LDPE (low-density polyethylene) LLDPE (linear low-density polyethylene), VLDPE (very low-density polyethylene) and/or ULDPE (ultra low-density polyethylene). Preferably, the polyolefin is selected from LDPE, EVA, and mixtures thereof, more preferably the polyolefin is LDPE. The polyolefin may come from the use of a masterbatch comprising the expandable microspheres for preparing the composition. The polyolefin(s) may be present in the composition in the same amounts as those described above in relation to the additional thermoplastic polymer.

However, advantageously, the composition of the invention comprises less than or equal to 2 % by weight, preferably less than or equal to 1 % by weight, more preferably less than or equal to 0.5 % by weight, of LDPE, based on the total weight of the composition. More preferably, the composition of the invention comprises less than or equal to 2 % by weight, preferably less than or equal to 1 % by weight, more preferably less than or equal to 0.5 % by weight, of polyethylene, based on the total weight of the composition. Even more preferably the composition of the invention comprises less than or equal to 2 % by weight, preferably less than or equal to 1 % by weight, more preferably less than or equal to 0.5 % by weight, of polyolefin, based on the total weight of the composition. Most preferably, the composition is devoid of LDPE, preferably of polyethylene, more preferably of polyolefin. Indeed, polyolefins, and in particular LDPE,

have poor compatibility with the PEBA of the invention, and thus the presence of polyolefins in the composition could impair some of its mechanical properties.

Advantageously, the composition according to the invention has a Shore D hardness greater than or equal to 40, preferably greater than or equal to 55. For example, the composition may have a Shore D hardness of from 40 to 45, or from 45 to 50, or from 50 to 55, or from 55 to 60, or from 60 to 65, or from 65 to 70, or from 70 to 75, or from 75 to 80. The Shore D hardness can be measured according to ISO 868.

The composition of the invention optionally comprises at least one UV stabilizer and/or UV absorber. Preferably, the composition comprises at least two UV stabilizers and/or UV absorbers. The UV stabilizers and UV absorbers may in particular be selected from phenolic stabilizers, phosphite stabilizers, HALS (hindered amine light stabilizers), inorganic stabilizers and combinations thereof.

The composition may comprise the UV stabilizers and the UV absorbers in an amount from 0.01 to 2 % by weight, more preferably from 0.05 to 1.5 % by weight, further preferably from 0.02 to 0.3 % by weight, based on the total weight of the composition.

The composition of the invention may comprise at least one another additive. Preferably, the total amount of said additives, based on the total weight of the composition, is from 0 to 57 % by weight, preferably from 0.1 to 46.5 % by weight, more preferably from 0.5 to 36.2 % by weight. Said additives may include compatibilizers, reinforcement agents (including fillers), impact modifiers, pigments, adhesion promoter, nucleating agents, plasticizers, other polymers, antioxidants, flame retardants and processing aids.

The composition may comprise at least one compatibilizer, in particular when the composition comprises a polyolefin. The compatibilizer may be any compatibilizer able to increase the compatibility of the PEBA with the expandable microspheres, with the additional thermoplastic polymer and/or with the polyolefin. The compatibilizer advantageously bears reactive functions which can preferably react with the amine, carboxylic acid or alcohol functions borne by the PA block or the PE block of the PEBA. In particular, the compatibilizer may be selected from the group consisting of functionalized polyolefins containing functional groups such as groups derived from maleic anhydride (MAH) and/or glycidyl methacrylate (GMA).

Preferably, the compatibilizer is present in the composition in an amount of from 0 to 2% by weight, more preferably from 0 to 1.5 % by weight, even more preferably from 0 to 1.2 % by weight.

The composition may comprise the compatibilizer in an amount from 0.1 to 2 % by weight, preferably from 0.2 to 1.5 % by weight, further preferably from 0.3 to 1.2 % by weight, based on the total weight of the composition.

Alternatively, the composition may comprise less than or equal to 0.5 % by weight, preferably less than or equal to 0.1 % by weight, of compatibilizer, based on the total weight of the composition, or more preferably the composition may be devoid of compatibilizer.

The composition may comprise at least one reinforcement agent. The reinforcement agent may be any suitable reinforcement agent. Preferably, the reinforcement agent is selected from the group consisting of glass fibers, carbon fibers, basalt fibers, synthetic fibers such as aramid fibers, fillers, such as for example calcium carbonate, barium sulfate and/or silicon oxide, ceramics and mixtures thereof.

Preferably, the reinforcement agent is present in the composition in an amount of from 0 to 30 % by weight more preferably from 0 to 25 % by weight, even more preferably from 0 to 20 % by weight.

In some embodiments, the composition comprises at least 6 % by weight of the reinforcement agent (for example, 6 to 30 % by weight, or 6 to 25 % by weight, or 6 to 20 % by weight, based on the total weight of the composition).

Alternatively, the composition may comprise less than or equal to 1 % by weight, preferably less than or equal to 0.5 % by weight, of reinforcement agent, based on the total weight of the composition, or more preferably the composition may be devoid of reinforcement agent.

The composition may comprise other additives, in particular selected from impact modifiers, pigments (such as $TiO_2$ and other compatible pigments), adhesion promoters (in order to improve the adhesion of the expanded composition to other materials), nucleating agents (in pure form or in concentrated form), for example ZnO, plasticizers, antioxidants, flame retardants, processing aids, for example stearic acid, and other polymers, such as ethylene/acrylate copolymers, ethylene/alkyl(meth)acrylate copolymers, and/or rubbers (in particular to improve elasticity, such as natural rubber, SBR, polybutadiene and/or ethylene-propylene terpolymers) , and the mixtures thereof. Typically, the composition can comprise from 0 to 5 % by weight, preferably from 0.5 to 5 % by weight of other additives, based on the total weight of the composition.

In some embodiments, the composition of the invention may comprise, or consist of:

- the at least one copolymer comprising polyamide blocks and polyether blocks, preferably in an amount of from 29 to 99.89 % by weight;
- from 0.1 to 6.0 % by weight of the expandable microspheres;
- optionally the at least one additional thermoplastic polymer, preferably in an amount of from 0 to 6 % by weight;
- optionally at least one UV stabilizer and/or UV absorber, preferably in an amount of 0.01 to 2 % by weight; and
- optionally one or more other additives, preferably chosen from the group consisting of compatibilizers, reinforcement

agents, impact modifiers, pigments, adhesion promoter, nucleating agents, plasticizers, processing aids, antioxidants, flame retardants and other polymers preferably in an amount of from 0 to 57 % by weight; more preferably:

  - optionally at least one compatibilizer, preferably in an amount of 0 to 2 % by weight;
  - optionally at least one reinforcement, preferably in an amount of 0 to 30 % b weight; and
  - optionally one or more additives, preferably chosen from the group consisting of impact modifiers, pigments, adhesion promoter, nucleating agents, plasticizers, processing aids, antioxidants, flame retardants and other polymers, preferably in an amount of from 0 to 5 % by weight.

Preferably, the composition comprises, or consists of:

- the at least one copolymer comprising polyamide blocks and polyether blocks, preferably in an amount of from 42 to 99.45 % by weight;
- from 0.5 to 5.0 % by weight of the expandable microspheres;
- optionally the at least one additional thermoplastic polymer, preferably in an amount of from 0 to 5 % by weight;
- at least one UV stabilizer and/or UV absorber, preferably in an amount of 0.05 to 1.5 % by weight; and
- optionally one or more other additives, preferably chosen from the group consisting of compatibilizers, reinforcement agents, impact modifiers, pigments, adhesion promoter, nucleating agents, plasticizers, processing aids, antioxidants, flame retardants, and other polymers, preferably in an amount of from 0 to 46.5 % by weight; more preferably:

  - optionally at least one compatibilizer, preferably in an amount of 0 to 1.5 % by weight;
  - optionally at least one reinforcement, preferably in an amount of 0 to 40 % b weight; and
  - optionally one or more further additives, preferably chosen from the group consisting of impact modifiers, pigments, adhesion promoter, nucleating agents, plasticizers processing aids, antioxidants, flame retardants and other polymers, preferably in an amount of from 0 to 5 % by weight.

More preferably, the composition comprises, or consists of:

- the at least one copolymer comprising polyamide blocks and polyether blocks, preferably in an amount of from 54.8 to 98.9 % by weight;
- from 1.0 to 4.0 % by weight of the expandable microspheres;
- optionally the at least one additional thermoplastic polymer, preferably in an amount of from 0 to 4 % by weight;
- at least one UV stabilizer and/or UV absorber, preferably in an amount of 0.1 to 1 % by weight; and
- optionally one or more other additives, preferably chosen from the group consisting of compatibilizers, reinforcement agents, impact modifiers, pigments, adhesion promoter, nucleating agents, plasticizers, processing aids, antioxidants, flame retardants and other polymers, preferably in an amount of from 0 to 36.2 % by weight; more preferably:

  - optionally at least one compatibilizer, preferably in an amount of 0 to 1.2 % by weight;
  - optionally at least one reinforcement, preferably in an amount of 0 to 30 % b weight; and
  - optionally one or more further additives, preferably chosen from the group consisting of impact modifiers, pigments, adhesion promoter, nucleating agents, plasticizers processing aids, antioxidants, flame retardants and other polymers, preferably in an amount of from 0 to 5 % by weight.

The composition of the invention can be in any suitable form. In particular, the composition may be in the form of pellets or in the form of a powder. Preferably, the composition is in the form of pellets.

The composition according to the invention has a melt flow index (MFI) lower than or equal to 150 g/10 min, preferably from 1 to 150 g/10 min, more preferably from 10 to 110 g/10 min. In particular, the MFI of the composition may be from 1 to 10 g/10 min, or from 10 to 30 g/10 min, or from 30 to 50 g/10 min, or from 50 to 70 g/10 min, or from 70 to 90 g/10 min, or from 90 to 110 g/10 min, or from 110 to 130 g/10 min, or from 130 to 150 g/10 min. The melt flow index is measured at 235°C and at a moisture content below 500 ppm, under a load of 2.16 kg, according to ISO 1133.

Preparation of the composition

To prepare the composition of the invention, the expandable microspheres may be combined directly with the PEBA (i.e. added alone) or may be combined with the PEBA in the form of a masterbatch.

By "*masterbatch*" is meant in the present text a composition comprising expandable microspheres and at least one thermoplastic polymer (also called "*carrier polymer*" as it is used as a carrier of the expandable microspheres). The use of a masterbatch makes it possible to improve the processability of the expandable microspheres and more particularly to

facilitate their mixing with the PEBA of the composition of the invention, in particular when the expandable microspheres and the PEBA are mixed by dry-blending.

Preferably, the thermoplastic polymer of the masterbatch comprises, or is, a thermoplastic polymer compatible with the copolymer comprising polyamide blocks and polyether blocks of the composition of the invention. Preferably, the thermoplastic polymer of the masterbatch comprises, or is, a copolyamide or a thermoplastic elastomer, more preferably a polar thermoplastic elastomer, for example a thermoplastic polyurethane. In some embodiments which are less preferred, the thermoplastic polymer of the masterbatch may comprise, or be, at least one polyolefin, preferably selected from polyethylene (for example, as described above), ethylene/vinyl acetate copolymers (EVA) and mixtures thereof, more preferably from LDPE, EVA and mixtures thereof, even more preferably the thermoplastic polymer of the masterbatch is LDPE.

Preferably, in the masterbatch, the amount of the expandable microspheres is from 20 to 80 % by weight, more preferably from 30 to 70 % by weight, even more preferably from 40 to 60 % by weight, and/or the amount of thermoplastic polymer (carrier polymer) is from 20 to 80% by weight, more preferably from 30 to 70 % by weight, even more preferably from 40 to 60 % by weight, based on the total weight of the masterbatch. For example, the masterbatch may comprise substantially 50 % by weight of expandable microspheres and 50 % by weight of thermoplastic polymer. The masterbatch may also comprise additives, such as pigments, fillers or other additives such as those mentioned above.

In some embodiments, the expandable microspheres used to prepare the composition of the invention are not in the form of a masterbatch but are combined directly with the PEBA. In particular, the expandable microspheres added to the PEBA are preferably in the form of a powder comprising particles consisting of the expandable microspheres and optionally particles of additives.

Most preferably, the expandable microspheres used to prepare the composition of the invention are in the form of a masterbatch.

The composition of the invention can be prepared by any suitable method. The composition is prepared by mixing the PEBA with the expandable microspheres. The PEBA to be mixed with the expandable microspheres may advantageously be provided in the form of a powder or in the form of pellets, preferably in the form of a powder.

The mixing step may be carried out by compounding the PEBA (preferably in the form of a powder) and the expandable microspheres (i.e. by mixing the expandable microspheres with the PEBA in the molten state). Advantageously, the compounding of the PEBA with the expandable microspheres takes place in an extruder, for example in a twin-screw extruder. The compounding step is preferably carried out at a temperature greater than the melting temperature ($T_m$) of the PEBA(s), more preferably greater than or equal to $T_m$ + 20°C, even more preferably greater than or equal to $T_m$ + 30°C, and preferably lower than the expansion start temperature of the expandable microspheres. In the embodiments wherein the mixing step is a compounding step, the expandable microspheres are preferably provided without carrier polymer (in other words, preferably the expandable microspheres are not in the form of a masterbatch). However, the expandable microspheres may alternatively be in the form of a masterbatch as described above.

Alternatively, the mixing step may be carried out by dry-blending the PEBA and the expandable microspheres. The dry-blending step may be performed at room temperature (15-30°C) or at a higher temperature. Preferably the PEBA is in the form of a powder. Preferably, the expandable microspheres are in the form of a masterbatch as described above. The presence of the carrier polymer in the masterbatch enables to improve the mixing of the expandable microspheres with the PEBA.

The UV stabilizers/absorbers, and the other additives (compatibilizers, reinforcement agents, further additives as mentioned above...) when present in the composition of the invention, may be mixed with the expandable microspheres and the PEBA in any suitable manner and may independently added to any step of the preparation method of the composition (for example, before, during or after the step of mixing the expandable microspheres and the PEBA). In particular, they may (partly or totally) be premixed with the expandable microspheres and/or with the PEBA before their mixing; and/or they may (partly or totally) be mixed with the expandable microspheres and the PEBA when they are mixed together. The additives may be added in one or several steps, and they may be added in any order. They may be mixed with the expandable microspheres and/or the PEBA by dry-blending or compounding.

Expanded composition

The invention also relates to an expanded composition obtained or obtainable from expanding the composition of the invention. In other words, the expanded composition corresponds to a composition as described above in which the microspheres have expanded.

The expanded composition of the invention has a reduced density compared to the density of the unexpanded composition. Preferably, the reduction in density of the expanded composition compared to the unexpanded composition is at least 5 %, more preferably at least 10 %, further preferably at least 15 %, even more preferably at least 20 %, for example at least 25 %.

The expanded composition has advantageously a density of from 0.4 to 1.1 g/$cm^3$.

The densities of the expanded composition and of the unexpanded composition may be measured at 23°C according to ISO 1183.

Advantageously, the expanded composition shows a high storage modulus stability under temperature variation, typically between -50°C et 50°C, when measured by dynamic mechanical analysis (DMA). The storage modulus can be measured according to ISO 6721:2019, the measurement being carried out at a tensile strain of 0.1 %, at a frequency of 1 Hz, and at a heating rate of 2°C/min.

Preferably, the expanded composition has a yellow index lower than or equal to 20. The yellow index may be measured according to the standard ASTM E313-96 (D65), particularly using a Konica Minolta spectrocolorimeter with the illuminant D65 at 10° in specular component included (SCI) reflection mode.

The expanded composition according to the invention may be used to manufacture sports equipment, such as soles of sports shoes, ski boots, midsoles, insoles, or functional components soles, in the form of inserts in different parts of the sole (heel or arch, for example), or even components of the tops of shoes in the form of reinforcements or inserts in the structure of the upper shoe, in the form of protections. It may also be used to make balls, sports gloves (e.g. football gloves), components of golf balls, rackets, protective elements (vests, inner helmet or hull elements....).

The expanded composition may have anti-shock, anti-vibration, anti-noise properties and/or haptic properties adapted to capital goods. It may therefore also be used for the manufacture of railway parts, or of various parts in the automobile industry (for example, interior decorative elements), in transport, in electrical and electronic equipment, in construction or in the manufacturing industry.

An advantage of the expanded articles according to the invention is that they may easily be recycled, for example by melting them in an extruder equipped with a degassing outlet (optionally after having cut them into pieces).

<u>Preparation of the expanded composition</u>

The expanded composition may be prepared by any suitable method involving an expanding step of the composition, *i.e.* a step leading to the expansion of the microspheres in the composition. Typically, the expanding step involves heating the composition (thereby causing the expansion of the microspheres). As mentioned above, upon heating, the outer shell of the microspheres softens and the foaming agent inside the microsphere becomes a gas, inducing a substantial expansion of the microsphere. Most preferably, the PEBA of the composition subjected to the expanding step is in the molten state.

Preferably, in the expanding step, the composition is heated at a temperature higher than or equal to the expansion start temperature ($T_{s_exp}$) of the microspheres and preferably lower than or equal to $T_{max_exp}$ + 10°C ($T_{max_exp}$ being the maximum expansion temperature of the microspheres). For example, the composition may be heated at a temperature higher than or equal to $T_{s_exp}$ + 15°C and/or lower than or equal to $T_{max_exp}$ +5°C

Preferably, the method for preparing the expanded composition also comprises a step of creating a pressure drop in the heated composition. In these embodiments, the pressure drop triggers the expansion of the composition (i.e. the expansion of the microspheres).

Preferably, the expanding step is carried out by injection molding or extrusion.

In particular, the expanding process can be an injection molding process. Advantageously, the injection process comprises a step of introducing the composition into a mold, where preferably a pressure drop in the mold triggers the expansion of the composition. More particularly, the injection molding process may be carried out according to a short shot injection method, a mold opening method or a core-back method. These techniques make it possible to directly produce three-dimensional expanded objects having complex geometries.

Alternatively, the expanding process can be an extrusion process, such as an extrusion process using a single-screw extruder or a twin-screw extruder. Advantageously, the extrusion process comprises a step of introducing the composition into an extruder and a step of extruding the composition, causing the expanding of the composition when it exits the die of the extruder (the expanding being produced by the pressure drop resulting from the exit of the die).

Most preferably, the expansion is performed by injection molding.

Preferably, the expansion is not performed through a FDM 3D printing process. Expanding via FDM 3D printing may lead to some poor mechanical properties as previously described for the expanded composition such as low elongation at break, high anisotropic properties, compared to using injection molding or extrusion processes

**Claims**

**1.** A composition comprising:

- at least one copolymer comprising polyamide blocks and polyether blocks having a number average molecular weight of from 20 000 to 100 000 g/mol, preferably from 25 000 to 80 000g/mol and wherein the mass ratio of the

polyamide blocks relative to the polyether blocks of the copolymer is more than 1;
- from 0.1 to 6.0 % by weight of expandable microspheres, based on the total weight of the composition;
- optionally at least one UV stabilizer and/or UV absorber; and
- optionally at least one additional thermoplastic polymer compatible with the at least one copolymer comprising polyamide blocks and polyether blocks.

**2.** The composition of claim 1, having a melt flow index lower than or equal to 150 g/10 min, preferably from 1 to 150 g/10 min; and/or a Shore D hardness greater than or equal to 40, preferably greater than or equal to 55

**3.** The composition of any one of claim 1 to 2, wherein the polyamide blocks of the at least one copolymer comprising polyamide blocks and polyether blocks are selected from blocks of PA 11, PA 12, PA 6, PA5.10, PA5.12, PA 6.10, PA 6.12, PA6.13, PA 10.9, PA 10.10, PA 10.12, PA 10.14, PA 12.9, and mixtures thereof and copolymers thereof; and/or the polyether blocks of the copolymer comprising polyamide blocks and polyether blocks are polyethylene glycol blocks and/or polytetrahydrofuran blocks.

**4.** The composition of any one of claims 1 to 3, wherein the polyamide blocks of the at least one copolymer comprising polyamide blocks and polyether blocks have a number average molecular weight of from 400 to 20 000 g/mol, preferably from 500 to 10 000 g/mol; and/or the polyether blocks of the at least one copolymer comprising polyamide blocks and polyether blocks have a number average molecular weight of from 100 to 6000 g/mol, preferably from 200 to 3000 g/mol.

**5.** The composition of any one of claims 1 to 4, comprising the expandable microspheres in an amount of from 0.5 to 5.0 % by weight, preferably from 1.0 to 4.0 % by weight, based on the total weight of the composition.

**6.** The composition of any one of claims 1 to 5, wherein the at least one copolymer comprising polyamide blocks and polyether blocks has a melting temperature $T_m$, and wherein the expandable microspheres have an expansion start temperature of from Tm + 30°C to 270°C and/or a maximum expansion temperature lower than or equal to 280°C.

**7.** The composition of any one of claims 1 to 6, wherein the at least one additional thermoplastic polymer is a copolyamide or an elastomer, more preferably a polar elastomer, for example a thermoplastic polyurethane; and/or wherein the at least one additional thermoplastic polymer is present in an amount of from 0 to 6% by weight, in particular from 0.1 to 6 % by weight, preferably from 0.5 to 5 % by weight, more preferably from 1 to 4 % by weight, based on the total weight of the composition.

**8.** The composition of any one of claims 1 to 7, comprising less than or equal to 2 % by weight, preferably less than or equal to 1 % by weight of LDPE, preferably of polyethylene, more preferably of polyolefin; wherein, preferably, the composition is devoid of LDPE, preferably of polyethylene, more preferably of polyolefin.

**9.** The composition of any one of claims 1 to 8, wherein at least one UV stabilizer and/or UV absorber is selected from phenolic stabilizers, phosphite stabilizers, hindered amine light stabilizers, inorganic stabilizers and combinations thereof.

**10.** The composition of any one of claims 1 to 9, further comprising at least one compatibilizer, preferably selected from the group consisting of polyolefins functionalized with maleic anhydride and/or glycidyl methacrylate; and/or further comprising a at least one reinforcement agent, preferably selected from the group consisting of glass fibers, carbon fibers, basalt fibers, synthetic fibers, ceramics and mixtures thereof

**11.** The composition of any one of claims 1 to 10, in the form of pellets or in the form of a powder, preferably in the form of pellets.

**12.** An expanded composition obtainable from expanding a composition according to any one of claims 1 to 11.

**13.** The expanded composition of claim 12, having a melt flow index lower than or equal to 150 g/10 min, preferably from 1 to 150 g/10 min, more preferably from 10 to 110 g/10 min; and/or having a density from 0.4 to 1.1 g/cm$^3$.

**14.** An article consisting of an expanded composition according to any one of claims 12 to 13, or comprising at least one element consisting of an expanded composition according to ant one of claims 12 to 13, preferably selected from soles of sports shoes, balls, gloves, personal protective equipment, automobile and railway parts, construction parts and

parts of electrical and electronic equipment.

**15.** A method for preparing a composition according to any one of claims 1 to 11, comprising the steps of:

- providing the at least one copolymer comprising polyamide blocks and polyether blocks;
- providing the expandable microspheres; and
- compounding in an extruder the at least one copolymer comprising polyamide blocks and polyether blocks and the expandable microspheres.

**16.** A method for preparing a composition according to any one of claims 1 to 11, comprising the steps of:

- providing the at least one copolymer comprising polyamide blocks and polyether blocks in the form of a powder;
- providing the expandable microspheres; and
- dry-blending the powder of copolymer comprising polyamide blocks and polyether blocks and the expandable microspheres.

**17.** The method of claim 15 or 16, wherein the expandable microspheres are provided in the form of a masterbatch comprising the expandable microspheres and a polymer, preferably the at least one additional thermoplastic polymer compatible with the at least one copolymer comprising polyamide blocks and polyether blocks.

**18.** A method for producing an expanded composition according to any one of claims 12 to 13, comprising expanding a composition according to any one of claims 1 to 11 by heating said composition, wherein preferably the expanding step is carried out by injection molding or extrusion, more preferably by injection molding.

Europäisches Patentamt
European Patent Office
Office européen des brevets

# EUROPEAN SEARCH REPORT

Application Number
EP 24 30 7213

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/238509 A1 (UNIV BRETAGNE SUD [FR]) 17 November 2022 (2022-11-17)<br>* paragraph [0154]; example 3; table 2 *<br>* example 1; table 1 *<br>----- | 1-18 | INV.<br>C08L77/00<br>C08K7/22<br><br>ADD.<br>C08G69/40<br>C08J9/32 |
| X | US 2024/253309 A1 (KARKLINSH ROBERT [AE]) 1 August 2024 (2024-08-01)<br>* page 31, paragraph [0348] - paragraph [0349]; example 5 *<br>* paragraph [0042] *<br>& US 5 102 420 A (HUNTER ALASTAIR W [US] ET AL) 7 April 1992 (1992-04-07)<br>* table 1 *<br>----- | 1-18 | |

TECHNICAL FIELDS SEARCHED (IPC)

C08L
C08K
C08J
C08G

The present search report has been drawn up for all claims

1

| Place of search | Date of completion of the search | Examiner |
|---|---|---|
| Munich | 23 May 2025 | Wohnhaas, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 30 7213

This annex lists the patent family members relating to the patent documents cited in the above-mentioned European search report. The members are as contained in the European Patent Office EDP file on
The European Patent Office is in no way liable for these particulars which are merely given for the purpose of information.

23-05-2025

| Patent document cited in search report | Publication date | Patent family member(s) | Publication date |
|---|---|---|---|
| WO 2022238509 A1 | 17-11-2022 | FR 3122846 A1 | 18-11-2022 |
| | | WO 2022238509 A1 | 17-11-2022 |
| US 2024253309 A1 | 01-08-2024 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2022238509 A
- EP 613919 A
- JP 2004346274 B
- JP 2004352794 B
- EP 1482011 A
- FR 2846332


### Non-patent literature cited in the description


- **MARÉCHAL et al.** Synthesis and characterization of poly(copolyethers-block-polyamides) - II. Characterization and properties of the multiblock copolymers. *Polymer*, 2000, vol. 41, 3561-3580